# EUROPÄISCHE PATENTSCHRIFT

(11) **EP 0 899 704 B1**
(45) Veröffentlichungstag und Bekanntmachung des Hinweises auf die Patenterteilung: **03.11.2004**
(21) Anmeldenummer: 98114149.2
(22) Anmeldetag: 29.07.1998
(51) Int. Cl.: G08G 1/0968

(54) **Fahrzeugleit-und-Zielführungsverfahren**
Control and navigation method for vehicle
Procédé de commande et de navigation pour automobile

(30) Priorität: 27.08.1997 DE 19737256
(43) Veröffentlichungstag der Anmeldung: 03.03.1999
(73) Patentinhaber: ROBERT BOSCH GMBH, 70442 Stuttgart (DE)
(72) Erfinder: Hessing, Bernd, 31188 Holle (DE)

(56) Entgegenhaltungen:
- EP-A- 0 715 289
- DE-A- 4 139 581

## Beschreibung

Die Erfindung bettrifft ein Verfahren zur Zielfeihrung von Fahrzeugen für ein Fahrzeugleit- und Zielführungesystem.

### Stand der Technik

Zur Zielführung von Fahrzeugen sind fahrzeugfeste Navigationssysteme bekannt. Diese nutzen ein im Fahrzeug mitgeführtes, für die Navigation erforderliches Kartenmaterial, um das Fahrzeug zu einem vom Fahrzeugführer vorgebbaren Zielpunkt zu leiten. Es sind alle für die gesamte Route benötigten Informationen im Fahrzeug gespeichert. Hierbei ist nachteilig, daß entsprechend der Vielzahl unterschiedlicher Zielpunkte über ein relativ großes Territorium entsprechend große Speicherkapazitäten für die Navigationsinformationen vorzuhalten sind. Darüber hinaus ist nachteilig, daß eine Berücksichtigung aktueller, die Zielführung eines Fahrzeuges beeinflussender Informationen, beispielsweise Umleitungen, Straßensperrungen und so weiter, nicht berücksichtigbar sind.

Ferner sind übergeordnete Dienstesysteme (Dienstezentralen) zur Bereitstellung von Navigationsinformationen bekannt, mittels denen eine, eine von einem Fahrzeugführer vorgebbaren Zielpunkten entsprechende Route an ein fahrzeugfestes Navigationssystem übertragbar ist. Hierbei wird entsprechend des gewünschten Zielpunktes die gesamte Navigationsinformation übertragen. Nachteilig ist hierbei, daß einerseits eine relativ große Informationsmenge zu übertragen ist und andererseits sich während der Abfahrt der Route ergebende Änderungen nicht mehr berücksichtigbar sind.

Unter Route wird ein Ausschnitt aus einer im fahrzeugfesten Navigationssystem verwendbaren digitalen Karte mit mindestens einem Ziel verstanden. Zur Zielführung muß sich ein Fahrzeug auf digitaler Karte, das heißt der Route befinden.

Darüber hinaus sind Fahrzeugleit- und Zielführungssysteme bekannt, die entlang eines Fahrweges ortsfest angeordnete Verkehrsleiteinrichtungen aufweisen, mittels denen die Verkehrsleiteinrichtungen passierenden Fahrzeugen Navigationsinformationen eentsprechend einer gewünschten Route übertragbar sind.

Aus der EP 715 289 A2 ist ein Verfahren und System zur Zielführung eines Fahrzeugs bekannt. Eine Fahrtroute wird unter Berücksichtigung aktueller und/oder prognostizierter Verkehrsdaten ermittelt. Die Startposition und die Zielposition werden an einen externen Verkehrsrechner übertragen, der unter vorgegebenen Randbedingungen mindestens eine Fahrtroute übermittelt und an die Zielführungseinrichtung des Fahrzeugs überträgt. Die vom Verkehrsrechner an das Fahrzeug zu übertragenden Fahrtrouten weisen eine besonders geringe Datenmenge auf, wenn die Fahrtrouten als Vektorzug in Form von aufeinanderfolgenden Weggruppen übermittelt werden. Hierbei wird jeweils die vollständige Fahrtroute an das Fahrzeug übertragen.

Aus der DE 41 39 581 A1 ist ein Navigationsverfahren für Kraftfahrzeuge bekannt, bei dem aus der Vorgabe von Start- und Zielort und der Ermittlung des aktuellen Standortes eine Fahrempfehlung an den Fahrzeugbenutzer abgegeben wird. Die Information über den Start- und den Zielort wird vom Kraftfahrzeug aus an eine zentrale Leitstelle mittels einer Kommunikationseinrichtung übermittelt. Die zentrale Leitstelle ermittelt entsprechende Routenpläne, so dass die Fahrempfehlung über die Kommunikationseinrichtung von der zentralen Leitstelle an ein Kraftfahrzeug übermittelt wird. In einer besonderen Ausführungsform ermittelt die zentrale Leitstelle während des Befahrens der Fahrtroute den jeweiligen Standort des Kraftfahrzeugs. Sie erhält damit die Möglichkeit, Abweichungen von der Fahrtroute festzustellen und entsprechende Fahrempfehlungen auszugeben.

### Vorteile der Erfindung

Das erfindungsgemäße Fahrzeugleit- und Zielführungssystem bietet den Vorteil, dass mittels einem relativ einfach aufgebauten fahrzeugfesten Navigationssystem, das eine Eigenortung des Fahrzeuges, beispielsweise mit GPS, umfasst, und einem mit diesem kommunizierenden Dienstezentrale für eine Routenführung relativ geringe Informationsmengen ausgetauscht werden, wobei eine leistungsfähige dynamische Zielführung, das heißt, eine aktuelle Änderungen während der Abfahrt der Route berücksichtigende Übergabe von Navigationsinformationen möglich ist. Dadurch, daß das Navigationssystem eine Eingabeeinheit umfaßt über die ein Fahrziel eingebbar ist, eine sich hieraus ergebende Route von der Dienstezentrale ermittelbar ist und die Route abschnittsweise dem Navigationssystem zur Information des Fahrzeugführers bereitgestellt wird, ist es vorteilhaft möglich, eine notwendige Speicherkapazität des fahrzeugfesten Navigationssystems auf die Speicherung der von der Dienstezentrale bereitgestellten Routenabschnitte auszulegen. Durch die die Gesamtroute ergebende abschnittsweise Übertragung der Routenabschnitte können vor Erreichen des Endzieles, sich in einem nachfolgenden, noch zu durchfahrenden Routenabschnitt ergebende Änderungen berücksichtigt, und dem fahrzeugfesten Navigationssystem übergeben werden. Es können somit dynamische Navigationsinformationen, welche vom aktuellen Standort des Fahrzeuges noch relativ weit entfernt sind, für die Gesamtroute berücksichtigt werden, ohne daß hierzu einerseits Speicherkapazitäten des fahrzeugfesten Navigationssystems und zusätzliche Datenübertragungskapazitäten für die Kommunikation des fahrzeugfesten Navigationssystems mit der Dienstezentrale in Anspruch genommen werden. Erst wenn der aktuelle Standort des Fahrzeuges in einen nächsten Routenabschnitt übergeht, wird der dann bereits von der Dienstezentrale aktualisierte Routenabschnitt dem Navigationssystem des Fahrzeuges übertragen.

Das Fahrzeugleit- und Zielführungssystem mit den im Anspruch 9 genannten Merkmalen bietet den Vorteil, daß unmittelbar vor Antritt das fahrzeugfeste Navigationsssystem entsprechend eines wählbaren Fahrzieles mit einer aktuellen Route geladen werden kann. Dadurch, daß das Navigationssystem vor Fahrtantritt mit der Dienstezentrale zur Kommunikation in Verbindung bringbar ist, wobei entsprechend eines vorgebbaren Fahrzieles von der Dienstezentrale die aktuellste, sich aus dem vorgebbaren Fahrziel ergebende Route dem Navigationssystem überspielt wird, ist es vorteilhaft möglich, alle sich bis Fahrtantritt ergebenden Verkehrsinformationen bei der Festlegung der Fahrtroute zu berücksichtigen. Das fahrzeugfeste Navigationssystem braucht einerseits keine große Speicherkapazität zur Festlegung von Routen zu allen eventuell möglichen Fahrzielen zu besitzen, da lediglich nur die dem tatsächlichen Fahrziel zuzuordnende aktuelle Route überspielt und abgespeichert zu werden braucht. Darüber hinaus lassen sich so kurzfristig, bis Fahrtantritt, eintretende Verkehrsinformationen, beispielsweise Straßensperrungen, Verkehrsaufkommen, Verkehrsprognosen und ähnliches, bei der Festlegung der Route berücksichtigen. Bevorzugt ist, wenn das Navigationssystem mit der Dienstezentrale über einen Telekommunikationsdienst, beispielsweise ein leitungsgebundenes oder leitungsloses Telekommunikationsnetz, zur Überspielung in Verbindung bringbar ist.

In weiterer bevorzugter Ausgestaltung der Erfindung ist vorgesehen, daß im fahrzeugfesten Navigationssystem bestimmte wählbare, beispielsweise wiederkehrende Routen, abspeicherbar sind. Vor Fahrtantritt wird über die Kommunikationsverbindung mit der Dienstezentrale die entsprechend dem tatsächlichen Fahrziel entsprechende Route als Update aktualisiert. Hierdurch ergibt sich ebenfalls eine dynamische, das heißt relativ aktuelle Verkehrsinformationen berücksichtigende, Navigationsinformation für das Kraftfahrzeug.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
Figur 1 eine schematische Ansicht eines Fahrzeugleit- und Zielführungssystems in einem ersten Ausführungsbeispiel und
Figur 2 eine schematische Darstellung eines Fahrzeugleit- und Zielführungssystems in einer zweiten Ausführungsvariante.

### Beschreibung der Ausführungsbeispiele

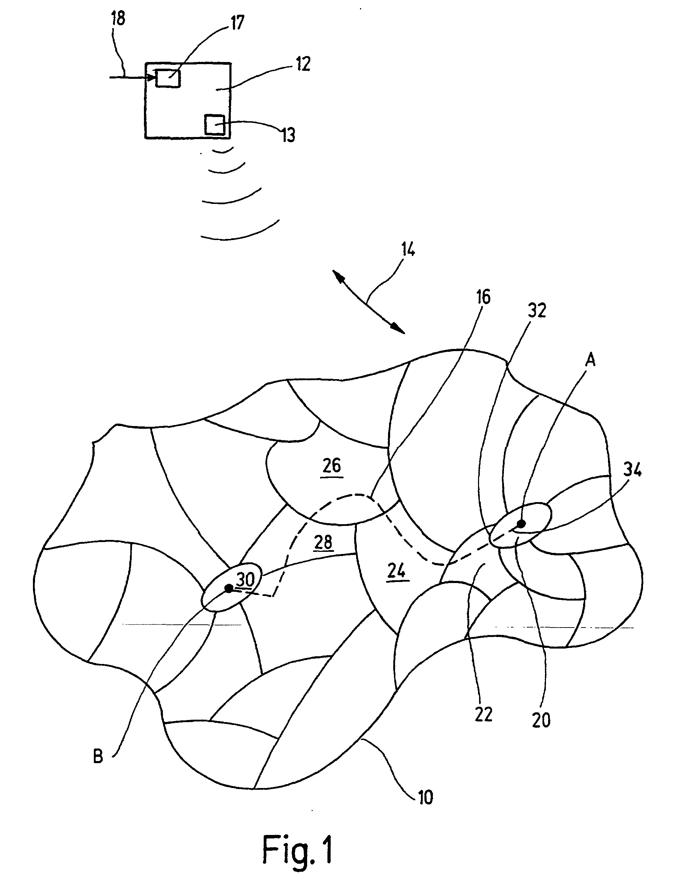

In Figur 1 ist schematisch eine Landkarte 10 gezeigt, anhand der das erfindungsgemäße Verfahren zur Zielfuhrung erläutert werden soll. Im Beispiel wird davon ausgegangen, daß ein nicht dargestelltes Kraftfahrzeug von einem Ausgangspunkt A zu einem Fahrziel B gelangen möchte. Am Ausgangspunkt A gibt der Fahrzeugführer des Fahrzeuges an seinem fahrzeugfesten Navigationssystem das Fahrzeugziel B ein. Hierauf tritt das Navigationssystem mit einer Dienstezentrale 12 in eine Kommunikationsverbindung 14. Die Kommunikationsverbindung 14 kann beispielsweise über ein Mobilfunknetz erfolgen. Hierzu besitzen sowohl das Fahrzeug als auch die Dienstezentrale 12 eine Empfangs- und Sendeeinrichtung 13.

Die Dienstezentrale 12 führt die Information, das heißt, das genannte Fahrziel B, einem Rechner 17 zu, der anhand einer im Rechner 17 abgespeicherten, detaillierten Karte der gesamten Landkarte 10 eine optimale Route 16 zum Erreichen des Fahrzieles B errechnet. Diese Route 16 ergibt sich einerseits aus der abgespeicherten Landkarte 10 und zusätzlichen aktuellen externen Verkehrsinformationen 18, mit dem die Dienstezentrale 12 fortlaufend versorgt wird. Die Verkehrsinformationen 18 können beispielsweise Hinweise auf gesperrte Straßen, Staustrecken, schwierige Witterungsverhältnisse und ähnliches sein.

Unter Berücksichtigung der Verkehrsinformation 18 und der Landkarte 10 wird die Route 16 dem Fahrzeug abschnittsweise über die Kommunikationsverbindung 14 übertragen. Die einzelnen Abschnitte der Route 16 die dem Fahrzeug übertragen werden, richten sich nach einer zuvor festgelegten Einteilung der Landkarte 10. Die Landkarte 10 ist hierzu in bestimmte Bereiche eingeteilt, von denen hier beispielsweise ein Bereich 20, ein Bereich 22, ein Bereich 24, ein Bereich 26, ein Bereich 28 und ein Bereich 30 genannt sind. Die Einteilung der Bereiche 20 bis 30 und auch der weiteren nicht bezeichneten Bereiche kann beispielsweise nach geographischen Gegebenheiten, verwaltungsorganisatorischen Gegebenheiten (Kreise, Städte, Gemeinden und so weiter) oder anderen frei wählbaren Kriterien erfolgen. Die einzelnen Bereiche 20 bis 30 grenzen jeweils an Übergangspunkten 32 aneinander an. (Aus Gründen der Übersichtlichkeit ist in Figur 1 nur ein Übergangspunkt 32 dargestellt, wobei klar ist, daß diese zwischen allen Bereichen der Landkarte 10 existieren.) Vorteilhaft ist die Einteilung der Bereiche anhand von fahrtspezifischen Randbedingungen. Beispielsweise kann eine Teilroute bei einer Fernfahrt auf Autobahnen auf den Bereich der Autobahn beschränkt sein und ein großes Gebiet abdecken. Bei einer Stadtfahrt wird die Route alle Straßen und ein kleines Gebiet abdecken.

Entsprechend der Anforderung des Fahrzeuges, das vom Ausgangspunkt A zum Fahrziel B gelangen wird, wird in der Dienstezentrale 12 die für dieses Fahrzeug günstigste Route 16 ermittelt und separat erfaßt und in der Dienstezentrale 12 abgespeichert. Zum Beispiel verläuft die Route 16 über die Bereiche 20, 22, 24, 26, 28 und 30. Zunächst wird dem Navigationssystem des Fahrzeuges ein erster Abschnitt 34 der Route 16 überspielt, der dem Verlauf der Route 16 in dem Bereich 20 zuzuordnen ist. Hierzu erfolgt beispielsweise eine Übertragung einer detaillierten digitalen Karte an das Navigationssystem des Fahrzeuges, wobei diese sich ausschließlich auf den Bereich 20 bezieht. Da das Navigationssystem des Fahrzeuges nicht die gesamte detaillierte Landkarte 10, sondern nur den Bereich 20 erfassen und zwischenspeichern muß, ist eine entsprechend geringe Speicherkapazität vorzusehen. Für das Navigationssystem des Fahrzeuges wird zunächst der Übergangspunkt 32 zwischen dem Bereich 20 und 22 als autonomes Zwischenziel vorgegeben. Das bedeutet, der Fahrzeugführer des Fahrzeuges erhält von diesem Zwischenziel keine Kenntnis, da er ja zum Fahrziel B gelangen will. Für das Navigationssystem des Fahrzeuges jedoch ist zunächst das autonome Zwischenziel am Übergangspunkt 32 zwischen den Bereichen 20 und 22 das scheinbare Fahrziel.

Das Navigationssystem des Fahrzeuges selber kann auf unterschiedliche Art und Weise die notwendigen Informationen an den Fahrzeugführer weitergeben, beispielsweise durch Anzeigen einer entsprechenden Karte auf einem Display, durch digitale Sprachhinweise oder andere digitale oder analoge Hinweise zum Führen des Fahrzeuges.

Über eine Selbstortung des Fahrzeuges erkennt die Dienstezentrale 12 eine Annäherung des Fahrzeuges an den Übergangspunkt 32 zwischen den Bereichen 20 und 22. Mit Erreichen des Übergangspunktes 32 oder kurz vor Erreichen des Übergangspunktes 32 wird dem Navigationssystem des Fahrzeuges über die Empfangs- und Sendeeinrichtung 13 der nächste Abschnitt der Route 16, der, im gezeigten Beispiel, im Bereich 22 verläuft überspielt. Da der Bereich 20 bereits abgefahren ist, können die sich hierauf beziehenden Navigationsinformationen gelöscht werden. Somit wird keine zusätzliche Speicherkapazität benötigt.

Da der auf den Bereich 22 fallende Abschnitt der Route 16 erst mit Erreichen des Übergangspunktes 32 dem Navigationssytem überspielt wird, können zwischenzeitliche, das heißt, seit Fahrtantritt am Ausgangspunkt A eingegangene, Verkehrsinformationen 18 vom Rechner 17 verarbeitet und bei der aktuellen Festlegung der noch abzufahrenden Route 16 berücksichtigt werden. Insofern kann sich die interne, das heißt die in der Dienstezentrale 12 zunächst festgelegte Route während des tatsächlichen Abfahrens der Route 16 ändern, ohne daß der Fahrzeugführer hiervon Kenntnis erlangt. Mit Erreichen des Übergangspunktes 32 zwischen den Bereichen 22 und 24 erfolgt in analoger Weise das Überspielen des nächsten Abschnittes der Route 16, das heißt, in diesem Fall der auf den Bereich 24 fallende Abschnitt, von der Dienstezentrale 12 zu dem Navigationssystem des Fahrzeuges. Diese Verfahrensweise wird fortgeführt, bis das Fahrziel B erreicht ist.

Insgesamt ergibt sich der Vorteil, daß durch das erfindungsgemäße Fahrzeugleit- und Zielführungssystem sich eine Aufgabenteilung der Navigation zwischen dem Navigationssystem des Fahrzeuges und der Dienstezentrale 12 ergibt. Die verhältnismäßig aufwendige Berechnung der Route 16 und deren laufende Aktualisierung, auch nach bereits erfolgtem Start am Ausgangspunkt A, erfolgt durch den leistungsfähigen Rechner 17 der Dienstezentrale 12. Somit ist eine dynamische Zielführung des Fahrzeuges möglich, da aktuelle Verkehrsinformationen 18 bei Festlegung beziehungsweise Änderung der Route 16 berücksichtigbar sind. Das autonome Navigationssystem des Fahrzeuges braucht lediglich eine geringe Speicherkapazität vorzuhalten, da die Route nur abschnittsweise, auf die erläuterten Bereiche 20 bis 30 bezogen, abzuspeichern ist. Das Navigationssystem erfaßt lediglich autonome Zwischenziele an den Übergangspunkten 32, die für den Fahrzeugführer nicht erkennbar sind, da diese für das Erreichen des Endzieles B untergeordnet sind.

Über eine Selbstortung der Fahrzeuge durch die Dienstezentrale 12 wird eine Abweichung des Fahrzeuges von der vorgegebenen Route 16 erfaßt, so daß auf eine sich hierdurch ergebende eventuelle Änderung der Route 16 bei der Bereitstellung der Navigationsinformationen sofort Einfluß genommen werden kann. Entweder erfolgt ein Hinweis an den Fahrzeugführer, daß die vorgegebene, optimale Route 16 verlassen wurde, oder es wird intern, das heißt, für den Fahrzeugführer nicht erkennbar, eine neue Route 16 erstellt und dem Navigationssystem überspielt. Sich aus der Änderung der Route 16 ergebende Änderungen in nachfolgenden Bereichen 20 bis 30 der Route werden zunächst intern von der Dienstezentrale 12 berücksichtigt, da die in den später zu durchfahrenden Bereichen 20 bis 30 sich ergebenden Abschnitte der Route 16 erst mit Erreichen des jeweiligen Übergangspunktes 32 dem Navigationssystem übergeben werden.

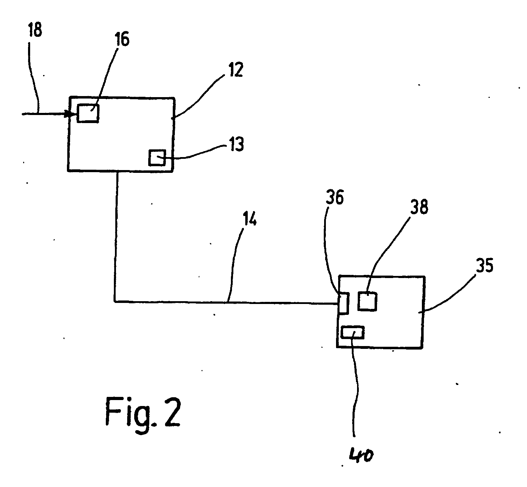

In Figur 2 ist eine weitere Ausführungsvariante zur Realisierung des erfindungsgemäßen Fahrzeugleit- und Zielführungssystems schematisch dargestellt. Gleiche Teile wie in Figur 1 sind mit gleichen Bezugszeichen versehen und nicht nochmals erläutert.

Gemäß dem in Figur 2 erläuterten Ausführungsbeispiel ist vorgesehen, daß das autonome Navigationssystem 35 des Fahrzeuges vor Fahrtantritt über die Kommunikationsverbindung 14 mit der Dienstezentrale 12 in Verbindung tritt. Die Kommunikationsverbindung 14 kann in diesem Fall eine leitungsgebundene Verbindung, beispielsweise eine Telefonleitung, Breitbandkabel oder ähnliches sein. Darüber hinaus kann die bereits zu Figur 1 erläuterte Funkverbindung zu der Dienstezentrale 12 hergestellt werden. Das Navigationssystem 35 besitzt eine Schnittstelle 36, über die eine Kommunikation mit der Dienstezentrale 12 möglich ist. Über eine Eingabeeinheit 38 wird der Dienstezentrale 12 das Fahrziel B mitgeteilt. Hierauf wird von dem Rechner 17 der Dienstezentrale 12 die optimale Route 16 ermittelt und dem Navigationssystem 35 übertragen. Das Navigationssystem 35 besitzt eine Speichereinheit 40, in der die der Route 16 entsprechenden übergebenen Navigationsinformationen speicherbar sind. Da ein Laden der Route 16 in die Speichereinheit 40 kurz vor Fahrtbeginn erfolgen kann, sind die aktuellsten Verkehrsinformationen 18 vom Rechner 17 bei der Planung der optimalen Route 16 berücksichtigbar.

Zur praktischen Realisierung ist entweder die Speichereinheit 40 des Navigationssystemes 35 transportabel ausgebildet, beispielsweise in Form einer Diskette oder beschreibbaren CD-ROM oder DVD, die zur Aufspeicherung der aktuellen Route 16 in entsprechende Datenverarbeitungsgeräte einbringbar sind oder das Navigationssystem 35 ist über die Schnittstelle 36 direkt mit der Kommunikationsverbindung 14 koppelbar. Da jeweils nur die aktuelle Route 16 in die Speichereinheit 40 geladen wird, kann die Speicherkapazität auf ein notwendiges Minimum beschränkt werden, da nicht die gesamte Landkarte 10 (Figur 1) mit allen eventuell möglichen Fahrzielen gespeichert zu sein braucht.

Gegebenenfalls kann vorgesehen sein, daß die Speichereinheit 40 mehrere, in der Regel als Standartrouten von dem Fahrzeug benutzte Routen gespeichert hat. Durch die Verbindung mit der Dienstezentrale 12 kurz vor Fahrtantritt erfolgt dann jeweils ein Update der Route 16, wobei die der Dienstezentrale 12 zur Verfügung stehenden aktuellen Verkehrsinformationen 18 bei der Planung der Route 16 berücksichtigbar sind. Auch hier ergeben sich die Vorteile, daß nicht das gesamte zur Verfügung stehende Straßennetz mit allen möglichen Fahrzielen im Navigationssystem 35 abzuspeichern ist.

Ferner ist eine Kombination der in den Ausführungsbeispielen gemäß Figur 1 und 2 erläuterten Fahrzeugleit- und Zielführungssysteme möglich. So kann vor Fahrtantritt eine einem gewählten Fahrziel B entsprechende Route 16 über eine leitungsgebundene Kommunikationsverbindung 14, beispielsweise über ISDN, in das Navigationssystem 35 geladen werden. Während der Abfahrt der Route 16 vom Ausgangspunkt A zum Fahrziel B wird über eine Selbstortung des Fahrzeuges der aktuelle Standort von der Dienstezentrale 12 überwacht. Nur wenn sich in der Zwischenzeit, das heißt nach dem Laden Route 16, im einzelnen die Route 16 berührenden Bereichen 20 bis 30 aufgrund aktueller Verkehrsinformationen 18 Änderungen der Route 16 ergeben, erfolgt ein entsprechender Datenaustausch und somit Korrektur der Route 16 im Navigationssystem 35. Hierdurch wird der Datenaustausch während der Fahrt auf ein unbedingt notwendiges Minimum begrenzt. Der Datenaustausch bezieht sich lediglich auf eventuell erforderliche Änderungen in der Route 16.

Die Erfindung beschränkt sich selbstverständlich nicht auf die erläuterten Ausführungsbeispiele. So ist beispielsweise möglich, anstelle eines Fahrzieles B vor Fahrtbeginn mehrere Fahrziele, beispielsweise bei der Betreuung von Kunden eines Außendienstmitarbeiters, beziehungsweise bei Speditionen, einzugeben, wobei die Dienstezentrale 12 die optimale Route 16 zur Abfahrt der mehreren Fahrziele ermittelt.

## Patentansprüche

1. Verfahren zur Zielführung eines Fahrzeugs für ein fahrzeugfestes Navigationssystem, das eine Eigenortung des Fahrzeugs umfasst und das eine Eingabeeinheit umfasst, über die wenigstens ein Fahrziel (B) eingegeben wird, und für eine übergeordnete Dienstezentrale zur Bereitstellung von Navigationsinformationen, wobei das Navigationssystem mit der Dienstezentrale über Sende- und Empfangseinrichtungen zumindest zeitweise kommuniziert, wobei eine sich aus einer Eingabe eines Fahrziels ergebende Route von der Dienstezentrale ermittelt wird, wobei die Route (16) abschnittsweise dem Navigationssystem (35) übertragen wird, **dadurch gekennzeichnet, dass** einzelne Abschnitte (34) der Route (16) dem Navigationssystem (35) jeweils entsprechend eines sich ändernden Standortes des Fahrzeuges derart übermittelt werden, dass die auf den ersten Abschnitt folgenden Abschnitte jeweils frühestens kurz vor, aber wenigstens mit Erreichen eines jeweiligen, vorgebbaren Übergangspunktes (32) übermittelt werden.

2. Verfahren zur Zielführung eines Fahrzeugs nach Anspruch 1, **dadurch gekennzeichnet, dass** bei der Übertragung noch abzufahrender Abschnitte (34) der Route (16) sich nach Abfahrt vom Ausgangspunkt (A) zwischenzeitlich ergebende neue Verkehrsinformationen (18) berücksichtigt werden.

3. Verfahren zur Zielführung eines Fahrzeugs nach einem der vorhergehenden Ansprüche **dadurch gekennzeichnet, dass** sich die Abschnitte (34) der Route (16) auf wählbare Bereiche (20, 22, 24, 26, 28, 30) der Landkarte (10) beziehen, wobei vorzugsweise die Bereichsgrenzen nach individuellen Gesichtspunkten bestimmt werden.

4. Verfahren zur Zielführung eines Fahrzeugs nach einem der vorhergehenden Ansprüche, **dadurch gekennzeichnet, dass** dem Navigationssystem (35) der Übergangspunkt (32) zwischen benachbarten Bereichen (20, 22, 24, 26, 28, 30) als ein autonomes, dem Fahrzeugführer verborgenes Zwischenziel vorgegeben wird.

5. Verfahren zur Zielführung eines Fahrzeugs nach einem der vorhergehenden Ansprüche, **dadurch gekennzeichnet, dass** mit Übergang zu einem neuen Abschnitt (34) der Route (16) der bereits abgefahrene Abschnitt (34) in dem Navigationssystem (35) gelöscht wird.

6. Verfahren zur Zielführung eines Fahrzeugs nach einem der vorhergehenden Ansprüche, **dadurch gekennzeichnet, dass** eine Abweichung des Fahrzeugs von der Route (16) erfasst wird, und eine sich hieraus ergebende Änderung der Route (16) von der Dienstezentrale (12) automatisch berücksichtigt wird.

7. Verfahren zur Zielführung eines Fahrzeugs für ein fahrzeugfestes Navigationssystem und für eine übergeordnete Dienstezentrale zur Bereitstellung von Navigationsinformationen, wobei das Navigationssystem mit der Dienstezentrale über Sende- und Empfangseinrichtungen zumindest zeitweise kommuniziert und wobei das Navigationssystem vor Fahrtantritt mit der Dienstezentrale zur Kommunikation in Verbindung gebracht wird, wobei entsprechend eines vorgegebenen Fahrziels (B) von der Dienstezentrale die zu befahrende Route dem Navigationssystem vollständig übermittelt wird, **dadurch gekennzeichnet, dass** für noch nicht abgefahrene Abschnitte (34) der Route (16) während der Abfahrt der Route (16) aufgrund aktueller Verkehrsinformationen (18) sich ergebende Veränderungen dem Navigationssystem (35) für die noch abzufahrenden Abschnitte (34) übertragen werden und dass einzelne Abschnitte (34) der Route (16) dem Navigationssystem (35) jeweils entsprechend eines sich ändernden Standortes des Fahrzeuges derart übermittelt werden, dass die Abschnitte jeweils frühestens kurz vor, aber wenigstens mit Erreichen eines jeweiligen, vorgebbaren Übergangspunktes (32) übermittelt werden.

8. Verfahren zur Zielführung eines Fahrzeugs nach Anspruch 7, **dadurch gekennzeichnet, dass** in einer Speichereinheit (40) des Navigationssystems (35) einzelne wählbare Routen (16) abgespeichert werden, die über eine Kommunikationsverbindung (14) von der Dienstezentrale (12) als ein Update aktualisiert werden.

9. Verfahren zur Zielführung nach einem der Ansprüche 7 bis 8, **dadurch gekennzeichnet, dass** dem Navigationssystem (35) mehrere Fahrziele (b) vorgegeben werden und die Dienstezentrale (12) eine Route (16) zur Abfahrt der mehreren Fahrziele (b) vorgibt.

## Claims

1. Method for routing of a vehicle for a navigation system which is fixed to the vehicle, comprising position finding for the vehicle itself and has an input unit via which at least one journey destination (B) is entered, and for a higher-level service control centre for the provision of navigation information, with the navigation system communicating at least at times with the service control centre via transmitting and receiving devices, with a route which results from the inputting of a journey destination being determined by the service control centre, with the route (16) being transmitted in sections to the navigation system (35), **characterized in that** individual sections (34) of the route (16) are in each case transmitted to the navigation system (35) on the basis of a change in location of the vehicle, such that the sections which follow the first section are in each case transmitted at the earliest shortly before reaching, but at least on reaching, a respective transition point (32) which can be predetermined.

2. Method for routing of a vehicle according to Claim 1, **characterized in that** new traffic information (18) which has been obtained in the meantime since departure from the point of origin (A) is taken into account in the transmission for sections (34) of the route (16) which have not yet been completed.

3. Method for routing of a vehicle according to one of the preceding claims, **characterized in that** the sections (34) of the route (16) relate to selectable areas (20, 22, 24, 26, 28, 30) of the map (10), with the area boundaries preferably being determined on the basis of individual viewpoints.

4. Method for routing of a vehicle according to one of the preceding claims, **characterized in that** the transition point (32) between adjacent areas (20, 22, 24, 26, 28, 30) is predetermined for the navigation system (35) as an autonomous waypoint, which is concealed from the vehicle driver.

5. Method for routing of a vehicle according to one of the preceding claims, **characterized in that**, when a transition takes place to a new section (34) of the route (16), the section (34) which has already been completed is deleted in the navigation system (35).

6. Method for routing of a vehicle according to one of the preceding claims, **characterized in that** any discrepancy between the vehicle and the route (16) is detected, and any change to the route (16) which results from this is automatically taken into account by the service control centre (12).

7. Method for routing of a vehicle for a navigation system which is fixed to the vehicle and for a higher-level service control centre for the provision of navigation information, with the navigation system communicating at least at times with the service control centre via transmitting and receiving devices, and with the navigation system being connected to the service control centre for communication before the start of the journey, and with the service control centre completely transmitting the route to be followed to the navigation system on the basis of a predetermined journey destination (B), **characterized in that** changes which result from up to date traffic information (18) while driving on the route (16) for those sections (34) which have not yet been completed are transmitted for the sections (34) of the route (16) which have not yet been completed to the navigation system (35), and **in that** individual sections (34) of the route (16) are in each case transmitted to the navigation system (35) on the basis of a change in location of the vehicle, such that the sections are in each case transmitted at the earliest shortly before reaching, but at least on reaching, a respective transition point (32) which can be predetermined.

8. Method for routing of a vehicle according to Claim 7, **characterized in that** individual selectable routes (16) are stored in a memory unit (40) for the navigation system (35) and are updated, as an update, via a communication link (14) from the service control centre (12).

9. Method for routing according to one of Claims 7 to 8, **characterized in that** a number of journey destinations (b) are predetermined for the navigation system (35), and the service control centre (12) specifies a route (16) for travelling to that number of journey destinations (b).

## Revendications

1. Procédé de guidage ciblé pour automobile pour un système de navigation de bord qui comprend un auto-repérage du véhicule et une unité d'entrée permettant d'entrer au moins une destination cible (B), et pour une centrale de service de supervision permettant de préparer les informations de navigation, le système de navigation communiquant au moins temporairement avec la centrale de service par des dispositifs émetteurs et récepteurs, la centrale de service calculant un itinéraire établi à partir d'une entrée d'une destination cible, l'itinéraire (16) étant transmis par portions au système de navigation (35),
**caractérisé en ce que**
différentes portions (34) de l'itinéraire (16) sont communiquées au système de navigation (35) respectivement en fonction d'une position du véhicule se modifiant, de manière que les portions suivant la première portion soient respectivement transmises au plus tôt peu avant un point de transition (32) correspondant prédéfini, mais au plus tard lorsque celui-ci est atteint.

2. Procédé de guidage ciblé pour automobile selon la revendication 1,
**caractérisé en ce que**
lors de la transmission des portions (34) de l'itinéraire (16) restant à parcourir, de nouvelles informations de trafic (18) enregistrées depuis le départ du point de départ (A) sont prises en compte.

3. Procédé de guidage ciblé pour automobile selon l'une quelconque des revendications précédentes,
**caractérisé en ce que**
les portions (34) de l'itinéraire (16) se rapportent à des zones sélectionnables (20, 22, 24, 26, 28, 30) de la carte (10), les limites de zones étant déterminées de préférence suivant des points de vue individuels.

4. Procédé de guidage ciblé pour automobile selon l'une quelconque des revendications précédentes,
**caractérisé en ce que**
le point de transition (32) entre les zones voisines (20, 22, 24, 26, 28, 30) est transmis au préalable au système de navigation (35) en tant qu'objectif intermédiaire autonome caché au conducteur.

5. Procédé de guidage ciblé pour automobile selon l'une quelconque des revendications précédentes,
**caractérisé en ce que**
la portion (34) déjà parcourue est supprimée du système de navigation (35) lors du passage à une nouvelle portion (34) de l'itinéraire (16).

6. Procédé de guidage ciblé pour automobile selon l'une quelconque des revendications précédentes,
**caractérisé en ce qu'**
un écart du véhicule de l'itinéraire (16) est enregistré et une modification correspondante de l'itinéraire (16) est prise en compte automatiquement par la centrale de service (12).

7. Procédé de guidage ciblé pour automobile pour un système de navigation de bord et pour une centrale de service de supervision permettant de préparer les informations de navigation, le système de navigation communiquant au moins temporairement avec la centrale de service par des dispositifs émetteurs et récepteurs et le système de navigation étant relié à la centrale de service avant le départ afin d'assurer la communication, la centrale de service envoyant complètement au système de navigation l'itinéraire à suivre en fonction d'une destination cible (B) prédéfinie,
**caractérisé en ce que**
pour des portions (34) de l'itinéraire (16) restant à parcourir, les modifications résultant des dernières informations de trafic (18) sont transmises pendant le départ de l'itinéraire (16) au système de navigation (35) pour les portions (34) restant à parcourir, et différentes portions (34) de l'itinéraire (16) sont communiquées au système de navigation (35) respectivement en fonction d'une position du véhicule se modifiant, de manière que les portions soient respectivement communiquées au plus tôt peu avant un point de transition (32) correspondant prédéfini, mais au plus tard lorsque celui-ci est atteint.

8. Procédé de guidage ciblé pour automobile selon la revendication 7,
**caractérisé en ce que**
différents itinéraires (16) sélectionnables sont enregistrés dans une mémoire (40) du système de navigation (35), et sont actualisés par la centrale de service (12) par une liaison de communication (14) comme mise à jour.

9. Procédé de guidage ciblé pour automobile selon l'une quelconque des revendications 7 à 8,
**caractérisé en ce que**
plusieurs destinations cibles (b) sont transmises au préalable au système de navigation et la centrale de service (12) transmet au préalable un itinéraire (16) pour le départ des différentes destinations cibles (b).
